# EUROPEAN PATENT APPLICATION

(11) **EP 2 587 829 A1**
(43) Date of publication of application: **01.05.2013**
(21) Application number: 12163554.4
(22) Date of filing: 10.04.2012
(51) Int. Cl.: H04N 21/472, H04N 21/44, H04N 21/658, H04N 21/845, H04N 21/414

(54) **Video analysis information upload apparatus and video viewing system and method**

(30) Priority: 28.10.2011 JP 2011237616
(71) Applicant: Kabushiki Kaisha Toshiba, Tokyo 105-8001 (JP)
(72) Inventor: Uehara, Tatsuya, Tokyo, 105-8001 (JP)
(74) Representative: Henkel, Breuer & Partner

(57) **Abstract**

According to one embodiment, a video analysis unit (12) is configured to detect feature amount information having preset characteristics by analyzing a received video signal. A characteristic scene detection unit (13) is configured to generate video characteristic scene information containing a time that identifies a characteristic scene of the video signal and a program name by using the feature amount information detected by the video analysis unit. And a characteristic scene information transmitting unit (14) is configured to upload the video characteristic scene information to a server as a characteristic scene storage/delivery apparatus.

## Description

Embodiments described herein relate generally to a video analysis information upload apparatus and a video viewing system and method.

Various functions have been available as a function to perform edit processing that edits a video signal in a recording and reproduction apparatus that records the video signal of a broadcasting program in a recording medium. For example, a chapter generation function that obtains a chapter by attaching a chapter mark to the video signal and a skip function that reproduces by skipping a commercial break are available.

Though the desire to effectively use the recording and reproduction apparatus by generating a chapter is strong, the edit function is actually used less frequently. This is because various conventional edit processing functions all involve processing performed through a remote controller or the like while the user views the recording and reproduction apparatus and a monitor screen (for example, a screen of a TV set), which is troublesome for the user.

Instead of being edited by the user, a technology that automatically recognizes and detects a face image of a specific actor (actress) from a video signal and generates a chapter for a detected scene has been developed. The detection of characteristic points using face recognition, speech recognition and the like is not yet completed and is experiencing daily evolution. Thus, if an application to perform the face recognition or voice recognition is captured into a recording and reproduction apparatus or TV receiver sold on the market, difficulties arise when the application is updated to a new version.

A general architecture that implements the various features of the embodiments will now be described with reference to the drawings. The drawings and the associated descriptions are provided to illustrate the embodiments and not to limit the scope of the invention.
FIG. 1 is a diagram exemplifying a network system to which an embodiment is applied;
FIG. 2 is a diagram showing a typical internal block of a characteristic scene detection apparatus 10, a characteristic scene storage/delivery apparatus 20, and a video reproduction control apparatus 30 shown in FIG. 1;
FIG. 3 is a diagram exemplifying a format of characteristic scene information used in the present embodiment;
FIG. 4 is a diagram exemplifying a format of data stored in a characteristic scene information storage unit 23 used in the present embodiment;
FIG. 5 is a diagram exemplifying a case when characteristic scene information used in the present embodiment is displayed in a display unit;
FIG. 6 is a flowchart shown to illustrate an operation of the characteristic scene detection apparatus used in the present embodiment; and
FIG. 7 is a block diagram further showing the characteristic scene detection apparatus shown in FIG. 2.

Various embodiments will be described hereinafter with reference to the accompany drawings.

In general, according to one embodiment, there are provided a video analysis information upload apparatus and a video viewing system and method, which enable automatic creation and delivery of so-called characteristic scene information indicating the time of a characteristic scene of a program so that the user can easily use the characteristic scene information.

According to an embodiment of the present disclosure, a video analysis information upload apparatus basically includes a video analysis unit that detects feature amount information having preset characteristics by analyzing a received video signal, a characteristic scene detection unit that obtains video characteristic scene information containing a time that identifies a characteristic scene of the video signal and a program name by using the feature amount information detected by the video analysis unit, and a characteristic scene information transmitting unit that uploads the video characteristic scene information to a server as a characteristic scene storage/delivery apparatus.

An embodiment will further be described with reference to the drawings.

The present embodiment can detect a scene having preset characteristics by receiving a video signal and analyzing the received video signal and upload an appearance time and comments on the detected characteristic scene to a specific server together with information identifying the video signal. The apparatus is a dedicated apparatus and can also detect the appearance time of a characteristic scene in real time and upload the appearance time to the server as a scene list.

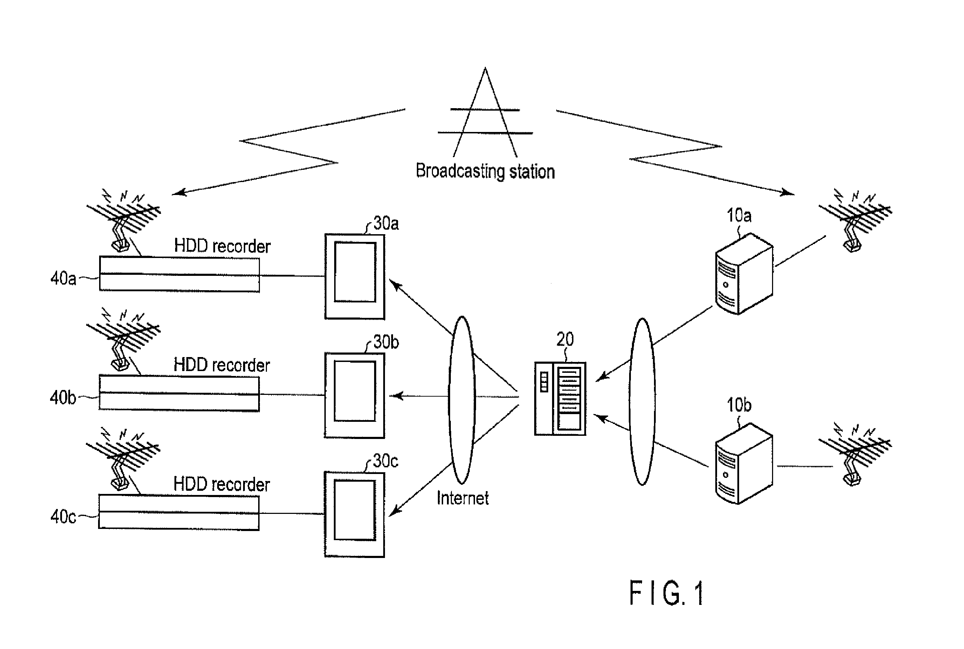

FIG. 1 shows a whole system to which an embodiment is applied. Reference numerals 10a, 10b are characteristic scene detection apparatuses. The characteristic scene detection apparatuses 10a, 10b are configured by, for example, personal computers and receive a broadcasting program broadcast from a broadcasting station to detect characteristic scenes of the received broadcasting program.

Characteristic scenes refer to, for example, the following scenes:
Start of each item of news in a news program;
Scene in which a specific person appears;
Scoring scene in sports;
Singing scene in a music program; and
Exciting scene in a variety show or the like.

The characteristic scene detection apparatuses 10a, 10b are each prepared for, for example, each broadcasting channel receiving a broadcasting program or prepared in accordance with a plurality of broadcasting stations or prepared for a plurality of regions and thus, a plurality of characteristic scene detection apparatuses is installed. The characteristic scene detection apparatuses 10a, 10b are each connected to the characteristic scene storage/delivery apparatus 20 via the Internet (or an intranet) and uploads reference information of a detected characteristic scene. The name of "reference information" is not limited to this and various names such as characteristic scene information, information for editing, extraction information, tag information, list information, and scene information may be used, but herein, the characteristic scene information will representatively be used below.

The characteristic scene storage/delivery apparatus 20 is configured by a personal computer as a server and stores characteristic scene information transmitted from the characteristic scene detection apparatus 10. On the other hand, if a desired program is specified and characteristic scene information is requested from, for example, a video control apparatus 30a, the characteristic scene storage/delivery apparatus 20 transmits characteristic scene information corresponding to the specified program to the video control apparatus 30a.

The video control apparatus 30a is described, but video control apparatuses 30b, 30c are shown in the figure as the video control apparatuses. The video control apparatuses 30b, 30c correspond to recording and reproduction apparatuses 40b, 40c respectively.

The video control apparatus 30a is configured by a smart phone, tablet personal computer, or personal computer and installed in the home. The video control apparatus 30a may include a mobile phone function. The apparatus can specify a program and request characteristic scene information of the program from the characteristic scene storage/delivery apparatus 20, acquire characteristic scene information of the program transmitted from the characteristic scene storage/delivery apparatus 20 in response to a request, and next present the acquired characteristic scene information of the program to the user. The video control apparatus 30a is connected to a recording and reproduction apparatus 40a by wire or a wireless LAN and can instruct the recording and reproduction apparatus 40a to reproduce from a scene if the user gives reproduction instructions to the scene of presented characteristic scenes.

The recording and reproduction apparatus 40a is installed in each home and has a function recording and reproducing a broadcasting program. The recording and reproduction apparatus 40a is configured by an HDD recorder, TV set with a recording function, or personal computer and can further incorporate the function of the video control apparatus 30a.

In the above description, the system of the video control apparatus 30a and the recording and reproduction apparatus 40a is representatively described. In FIG. 1, the video control apparatuses 30b, 30c are further shown as the video control apparatuses and the recording and reproduction apparatuses 40b, 40c as the recording and reproduction apparatuses. The video control apparatuses 30b, 30c correspond to the recording and reproduction apparatuses 40b, 40c respectively and each system has the function similar to the function of the video control apparatus 30a and the recording and reproduction apparatus 40a.

The present system can list characteristic scenes contained in a program by the video control apparatus 30a that can serve as a mobile terminal when a broadcasting program recorded by the recording and reproduction apparatus 40a is enjoyed. This is because the video control apparatus 30a can easily acquire characteristic scene information of a desired program by requesting from the characteristic scene detection apparatuses 10a, 10b. Then, if the user operates the video control apparatus 30a to specify a desired scene from a list of characteristic scenes, the recording and reproduction apparatus 40a can reproduce the video from the specified scene of the specified program.

The display unit of the video control apparatus 30a as a mobile terminal is used as touch operation screen and the user can easily perform an access operation to the characteristic scene storage/delivery apparatus 20 and an instruction operation of the recording and reproduction apparatus 40a.

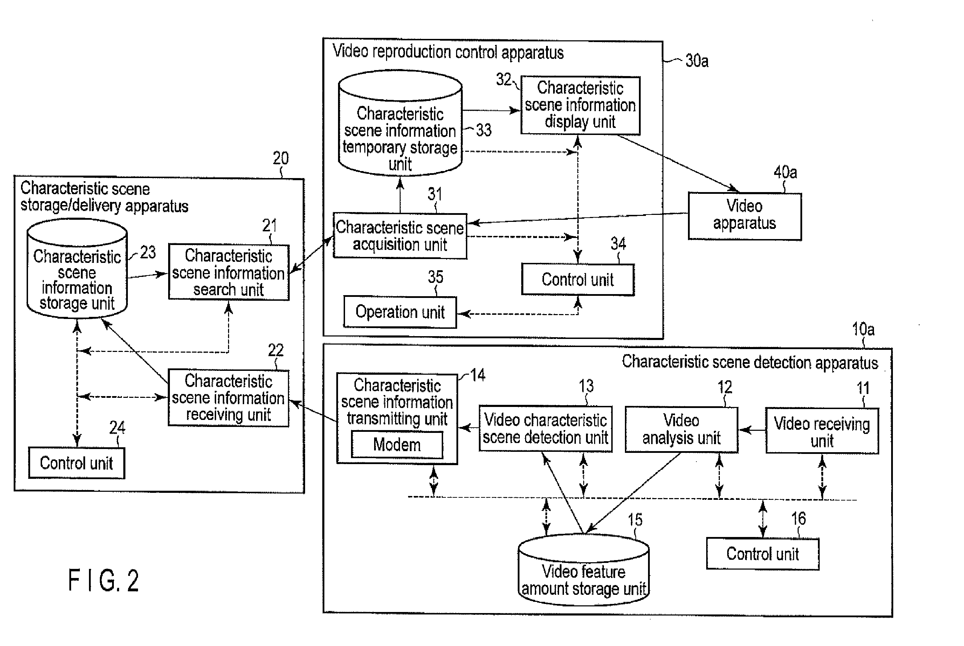

FIG. 2 representatively shows an internal block of the characteristic scene detection apparatus 10a, the characteristic scene storage/delivery apparatus 20, the display unit of the video control apparatus 30a, and the recording and reproduction apparatus 40a.

The characteristic scene detection apparatus 10a includes a video receiving unit 11, a video analysis unit 12, a video characteristic scene detection unit 13, a characteristic scene information transmitting unit 14, a video feature amount storage unit 15, and a control unit 16. The control unit 16 controls the video receiving unit 11, the video analysis unit 12, the video characteristic scene detection unit 13, the characteristic scene information transmitting unit 14, and the video feature amount storage unit 15 in a unified manner.

The video receiving unit 11 includes a tuner, decoder and the like and receives a broadcasting program signal and then performs decode processing of a video signal and audio signal. The video receiving unit 11 transmits the video signal and audio signal of the broadcasting program to the video analysis unit 12.

The video analysis unit 12 extracts frame or field images from the video signal to extract feature amount information. The video analysis unit 12 extracts feature amount information also from the audio signal.

The algorithm used to extract feature amount information is different depending on characteristic scenes detected by the feature amount to be extracted. If, for example, the face is recognized to detect a scene in which a specific person appears, the position of a face can be detected from a still image by a method described in, for example, Non-patent Literature 1 ("Joint Harr-like Features Based on Co-occurrence for Face Detection", IEICE TRANSACTIONS (D), vol. J89-D-II, No. 8, pp. 1791-1801, 2006). Then, feature amount information representing features of the face is extracted from a face image contained in a region containing the position of the detected face. For example, the technique described in Non-patent Literature 2 ("Automatic Facial Characteristic Point Detection for Still Image Face Recognition" by Mayumi Yuasa, Tomoyuki Takekuchi, Tatsuo Kosakatani, and Osamu Yamaguchi, IEICE Research Paper, PRMU2006-222, pp. 5-10, Feb. 2007) can be used.

The extracted feature amount information is stored in the video feature amount storage unit 15 together with the time code (relative time: for example, when the start of a program is set as zero, a relative time from the start to the relevant still image) corresponding to the still image.

The video characteristic scene detection unit 13 decides video characteristic scenes and a program name by using feature amount information stored in the video feature amount storage unit 15. For example, in the above example of detecting a specific person (for example, a specific actor [actress]), feature amount information at each relative time stored in the video feature amount storage unit 15 is sequentially extracted and preset facial feature amount information of the face is used to detect the specific person. For example, the mutual subspace method described in Non-patent Literature 3 ("Pattern matching Method Introducing the Local Structure" by Kenichi Maeda and Sadakazu Watanabe, IEICE TRANSACTIONS [D], vol. J68-D, No. 3, pp 345-352 [1985]) may be used. If the specific person is found, the scene is set as characteristic scene information, but a performer may continue to appear for a certain time in a program and thus, if a specific person is continuously detected, only the first scene is set as characteristic scene information and subsequent scenes are discarded. Face data of performers to be feature amount information may be stored, for example, in a database as parameters. In addition, a new parameter may be additionally registered from outside or deleted.

If characteristic scene detection processing on all feature amount information stored in the video feature amount storage unit 15 is completed, the characteristic scene information transmitting unit 14 can transmit characteristic scene information to the characteristic scene storage/delivery apparatus 20.

In the above description, extraction of feature amount information and detection of characteristic scene information by the video receiving unit 11, the video analysis unit 12, the video characteristic scene detection unit 13, the characteristic scene information transmitting unit 14, the video feature amount storage unit 15, and the control unit 16 are described as if information is extracted or detected from one program, but actually feature amount information is extracted and characteristic scene information is detected from a plurality of programs. Thus, a plurality of systems of the video receiving unit, video analysis unit, video characteristic scene detection unit, characteristic scene information transmitting unit, video feature amount storage unit, and control unit may be provided in the characteristic scene detection apparatus 10a. With the plurality of systems, for example, it becomes possible to extract feature amount information and detect characteristic scene information from a plurality of programs while receiving from a plurality of channels.

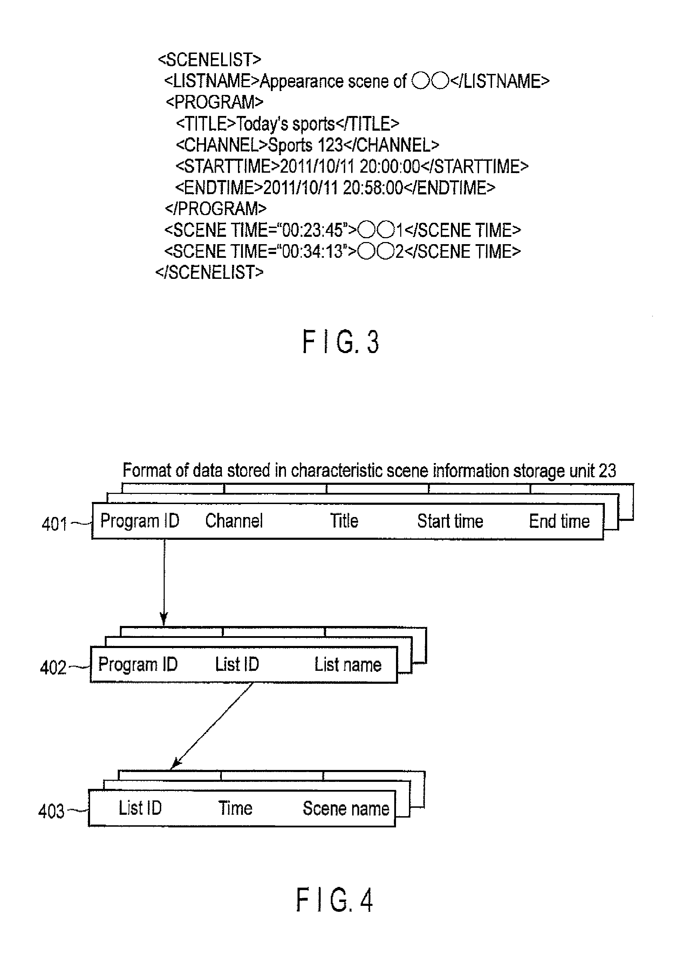

FIG. 3 is a diagram exemplifying a format of characteristic scene information transmitted from the characteristic scene detection apparatus 10a to the characteristic scene storage/delivery apparatus 20. The characteristic scene information contains information as shown below:

Name (LISTNAME) of the characteristic scene to be transmitted, in the example of FIG. 3,
List name <LISTNAME>Appearance scene of -- </LISTNAME>
Target program information (PROGRAM), in the example of FIG. 3,
As the title <TITLE>Today's sports</TITLE>
As the channel <CHANNEL>Tokyo 123</CHANNEL>
As the start time <STARTTIME>2011/10/11 20:00:00</STARTTIME>
As the end time <ENDTIME>2011/10/11 20:58:00</ENDTIME>
Information of a plurality of scenes<SCENE>, in the example of FIG. 3,
As a scene of the relative time from the program start time
<SCENE TIME="00:23:45">***1</SCENE>
<SCENE TIME="00:34:13">***2</SCENE>
are shown.

Next, the configuration of the characteristic scene storage/delivery apparatus 20 will be described. The characteristic scene storage/delivery apparatus 20 includes a characteristic scene information receiving unit 22, the characteristic scene information storage unit 23, a characteristic scene information search unit 21, and a control unit 24. The control unit 24 controls the characteristic scene information receiving unit 22, the characteristic scene information storage unit 23, and the characteristic scene information search unit 21 in a unified manner.

The characteristic scene information receiving unit 22 receives characteristic scene information transmitted from the characteristic scene detection apparatus 10a and stores the characteristic scene information in the characteristic scene information storage unit 23. The characteristic scene information storage unit 23 is configured as a relational database and stores characteristic scene information in the format shown in FIG. 4.

The format shown in FIG. 4 has three tables and a table 401 represents program information and includes a "program ID" uniquely given to each program, a broadcast "channel", a "title" of the program, and a "start time" and an "end time" of the program broadcasting.

A table 402 represents a list of specific characteristic scenes in one program and includes a "program ID" indicating the corresponding program, a "list ID" uniquely given to records in table 402, and a "list name" describing the type of characteristic scenes.

A table 403 represents individual characteristic scenes and includes a "list ID" indicating the list to which the characteristic scene belongs, a "time" indicating the time of the characteristic scene from the program start, and a "scene name" illustrating the characteristic scene.

The characteristic scene information search unit 21 searches the characteristic scene information storage unit 23 for the relevant characteristic scene information by using program information as a key after being instructed by the video control apparatus 30a and returns the characteristic scene information to the video control apparatus 30a. More specifically, the characteristic scene information search unit 21 receives, for example, the channel name, broadcasting start time, and title as program information from the video control apparatus 30a, searches for the record matching the program information from table 401, extracts the record in table 402 having the "program ID" of the applicable record and further extracts the record of table 403 having the "list ID" of the matching record. Information in the format in FIG. 3 is constituted from the record of table 403 corresponding to the "list name" of the record of table 402 and returned to the video control apparatus 30a. This format is generated for each record in table 402 and if a plurality of records matches, the same format is repeatedly used.

Next, the configuration of the video control apparatus 30a will be described. The video control apparatus 30a includes a characteristic scene acquisition unit 31, a characteristic scene information display unit 32, a characteristic scene information temporary storage unit 33, a control unit 34, and an operation unit 35.

The characteristic scene acquisition unit 31 can acquire program information of a program being reproduced by the video reproduction apparatus 40a according to instructions from the user. The characteristic scene acquisition unit 31 transmits the acquired program information to the characteristic scene storage/delivery apparatus 20 as a key. Accordingly, as described above, the characteristic scene storage/delivery apparatus 20 searches for characteristic scene information corresponding to the key and returns the characteristic scene information to the video control apparatus 30a. The characteristic scene acquisition unit 31 stores the characteristic scene information transmitted from the characteristic scene storage/delivery apparatus 20 in the characteristic scene information temporary storage unit 33 together with the above program information. The characteristic scene information display unit 32 presents characteristic scene information stored in the characteristic scene information temporary storage unit 33 to enable the user to select characteristic scenes.

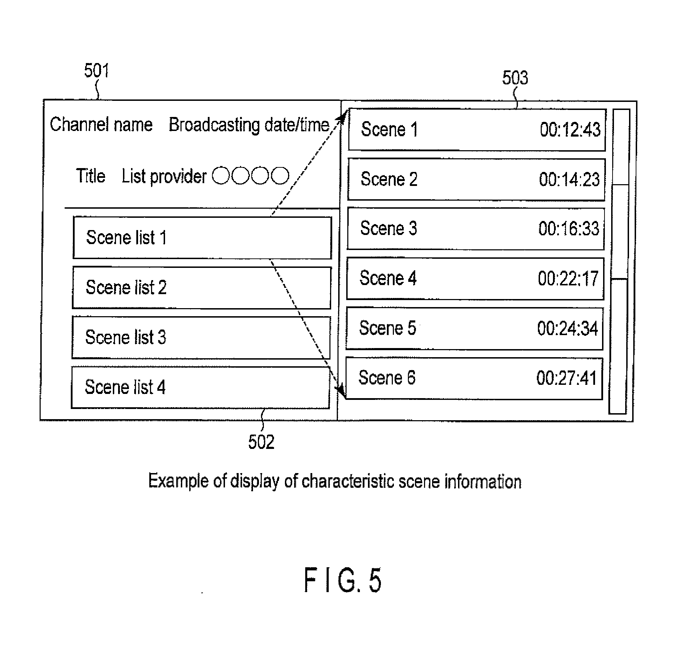

FIG. 5 shows an example in which the characteristic scene information display unit 32 displays a scene list of characteristic scenes in the screen. Program information being reproduced is displayed in a region 501 of the screen. In a region 502, scene lists (characteristic scene information) attached to the program are listed.

In the example of FIG. 5, the channel name, broadcasting date/time, and title name of the program are basically displayed in the region 501. In this case, the provider of the scene lists may be displayed. For example, the creator of the software that detects characteristic scenes or a person or company that sets search conditions to the software is displayed as the provider in the characteristic scene detection apparatus 10a.

Here, List 1 to List 4 are displayed in the example of FIG. 5 as scene lists (characteristic scene information) in the region 502. This means that at least four types of scene lists are prepared for the title displayed in the region 501.

Next, if one of the lists (Scene List 1 in the example of FIG. 5) is selected, scenes (characteristic scenes) contained in the list are displayed in a region 503. The example of FIG. 5 indicates that at least Scene 1 to Scene 6 are set.

Next, if a scene is selected, the video reproduction control apparatus 30a instructs the recording and reproduction apparatus 40a to reproduce the program in such a way that reproduction of the program starts at the time of the selected scene. The recording and reproduction apparatus 40 is, for example, a TV receiver to which a hard disk drive is connected, a dedicated recording and reproduction apparatus having a hard disk drive and an optical disk drive integrally, or a personal computer. When the video reproduction control apparatus 30a instructs the recording and reproduction apparatus 40 to reproduce, the instruction is conveyed wirelessly (such as radio waves and infrared rays), by wire, or an indoor network. The recording and reproduction apparatus 40 reproduces a recorded program based on reproduction instruction information from the video reproduction control apparatus 30a. In this case, the recording and reproduction apparatus 40 starts reproduction from the position of the relative time of the specified scene as the reproduction start position of the specified scene.

Incidentally, the reproduction method is not limited to the method described above. For example, start screens of Scenes 1 to 6 may be displayed in the monitor (display unit) of the recording and reproduction apparatus 40 as thumbnails. Alternatively, information of Scenes 1 to 6 is used, instead of one screen, as reproduction period information of about a few seconds (for example, 10 to 15 seconds) and Scenes 1 to 6 are displayed in the monitor (display unit) of the recording and reproduction apparatus 40 like a digest edition.

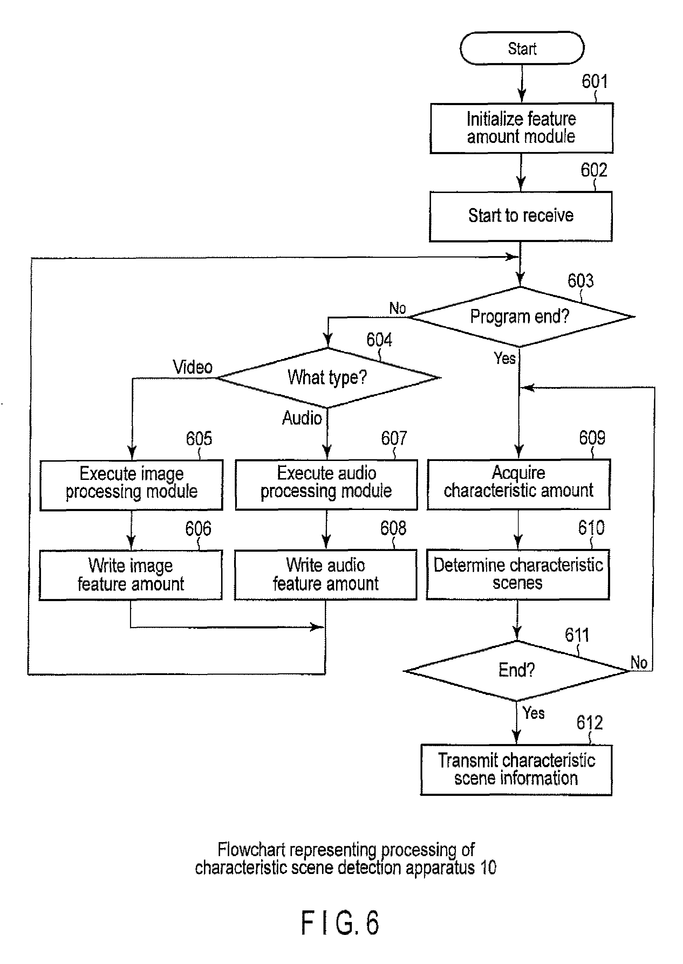

FIG. 6 is a diagram illustrating the flow of processing of the characteristic scene detection apparatus 10a. In step 601, each feature amount extraction module (video and audio module) in the video analysis unit 12 is initialized. Next, receiving processing is started by the video receiving unit 11 when a program starts according to instructions from an external timer (step 602). The receiving start processing from outside is widely used for timed recording and is not described in detail. When the receiving processing is started, data arises as a still image for each frame for video and for a fixed amount (for example, every 100 ms) for audio.

In step 604, if the acquired data is an image, in step 605, feature amount information is extracted from the acquired still image by a feature amount extraction module in the video analysis unit 12 and, in step 606, the feature amount information is written into the video feature amount storage unit 15. If the acquired data is audio, feature amount information is extracted by an audio processing module in the video analysis unit 12 (step 607) and the feature amount information is written into the video feature amount storage unit 15 (step 608).

When the program ends, the processing proceeds to step 609 according to instructions from the external timer and the video characteristic scene detection unit 13 sequentially reads necessary feature amount information from the video feature amount storage unit 15 to determine whether or not a characteristic scene (step 610). In step 611, if there is no feature amount detection to reproduce, determined characteristic scenes are fitted to the format shown in FIG. 3 transmitted to the characteristic scene storage/delivery apparatus 20.

Incidentally, there is not always a one-to-one correspondence between the feature amount extraction processing in steps 605, 607 and the characteristic scene determination processing in step 610. For example, if extraction processing of two characteristic scenes of an appearance scene of men and an appearance scene of women is considered, the facial feature amount of Patent Literature 2 is used for the feature amount extraction processing, but the same feature amount can be used for the characteristic scene determination processing of the appearance scene of men and the characteristic scene determination processing of the appearance scene of women. When music is determined from voice and the music name is determined from captions like a singing scene, one item of characteristic scene determination processing operates after results of two feature amount processing modules of video and audio are added.

In the flowchart of FIG. 6, the feature amount is acquired and the characteristic scenes are determined if the program ends in step 603, but the processing is not limited to this flow. For example, if audio and image feature amounts are written in steps 606 and 608, the processing in steps 609n and 610 may immediately be performed to determine characteristic scenes. Also in the flowchart of FIG. 6, characteristic scene information is transmitted if there is no feature amount information to read in step 611, but if a characteristic scene is detected, the characteristic scene detection apparatus 10a may immediately transmit characteristic scene information of the characteristic scene to the characteristic scene storage/delivery apparatus 20.

That is, the characteristic scene detection apparatus 10a may upload characteristic scene information almost in real time by detecting the feature amount of the video signal being received, searching for characteristic scenes based on the feature amount after the feature amount being detected, generating information about a characteristic scene as required after the characteristic scene being detected, and transmitting the information to the characteristic scene storage/delivery apparatus 20.

In the present embodiment, the characteristic scene detection processing is performed by receiving a broadcast signal, but video input is not limited to the above case. For example, video-on-demand via the Internet may be used. In this case, in contrast to broadcasting, the "title" and a "video ID" attached by the video-on-demand (VOD) server and capable of identifying video may be used as program information.

The detection processing by the characteristic scene detection apparatus 10a may be changed depending on content. For example, upsurge scene detection can be activated if the genre of the target program is sports and singing scene detection can be activated for a music program. As genre information of a program, information attached to SI information contained in a digital broadcast wave may be used.

Characteristic scene information stored by the characteristic scene storage/delivery apparatus 20 is assumed to be only information from the characteristic scene detection apparatuses 10a, 10b in the present embodiment, but if chapter information attached by the user in a recorder or the like is transmitted in a similar format, stored in the same manner, and the chapter information is used by a terminal, the chapter information can be displayed by distinguishing whether the chapter information stems from the user or the administrator.

In a system according to the present disclosure, a characteristic scene detection apparatus is externally present independently and devices with high computational capabilities such as personal computers may be used to configure the system. Thus, characteristic scenes requiring a large quantity of resources like video analysis using image pattern recognition can easily be detected. Also performance of a characteristic scene detection apparatus can easily be improved and usability of all recording apparatuses is enhanced only by improving the characteristic scene detection apparatus. Moreover, the system can perform high-speed processing and thus, the system can create characteristic scene information when a broadcasting program is received and provide the characteristic scene information to a reproduction control apparatus almost in real time. Thus, the user can use characteristic scene detection information immediately after a broadcasting program is recorded in a recording and reproduction apparatus.

The characteristic scene detection apparatuses 10a, 10b are not limited to the above embodiment and are devised for wide-ranging use.

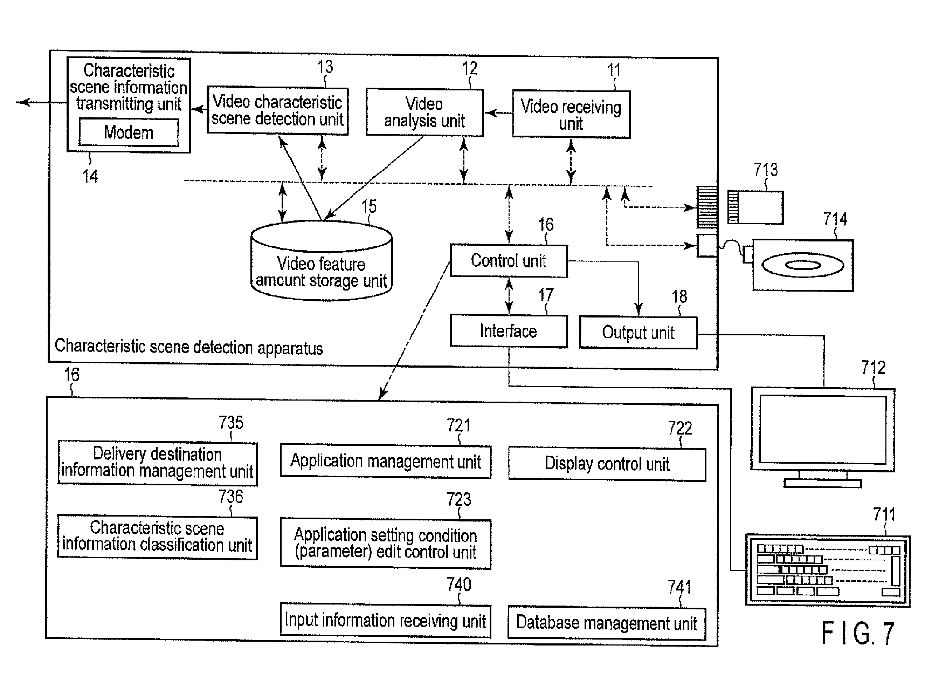

FIG. 7 shows the characteristic scene detection apparatus 10a in more detail. The characteristic scene information transmitting unit 14 contains a transmitting and receiving unit (modem) and can receive information from a server. Further, the characteristic scene information transmitting unit 14 includes an interface 17 and an output unit 18 and to which a keyboard 711 or an indicator 712 can be connected. Also, a memory 713 or an optical disk drive 714 can be connected thereto and a new application or an upgraded application can be captured from a recording medium.

The control unit 16 includes control units to realize various functions. For example, an application management unit 721, a display control unit 722, an application setting condition (parameter) edit control unit 723, a delivery destination information management unit 735, a characteristic scene information classification unit 736, an input information receiving unit 740, and a database management unit 741.

The application management unit 721 manages applications for video analysis, feature amount detection, and characteristic scene detection and various applications to execute other various functions (such as uploading and display control). For an application storage unit, a dedicated storage medium may be provided or a portion of region of the storage medium of the above video feature amount storage unit 15 may be used.

The display control unit 722 controls, for example, a menu display, a guidance display for installing an application, and a monitor display for input from outside.

The application setting condition (parameter) edit control unit 723 is used, for example, to limit the number of searches or correct the search interval for an application that searches for a face image of a specific person in a program or to adjust the number of persons if a plurality of specific persons is set. If a specific application is adopted, the range of activation of the application can be restricted, that is, the application can be made genre specific such as news, drama, popular music and the like. For a personal image detection application, for example, steps such as creating scene lists by operating the application only for news programs or creating scene lists by operating the application only for popular music. Further, the application setting condition (parameter) edit control unit 723 can also change the receiving channel and provide restriction information of broadcasting programs to be processed.

The delivery destination information management unit 735 is used, for example, when a service is provided to specific servers and/or specific video control apparatuses. Thus, the delivery destination information management unit 735 has information associating addresses (servers and/or video control apparatuses) of delivery destination with characteristic scene information to be transmitted to the addresses stored therein. Conversely, this can limit servers and/or video control apparatuses to which characteristic scene information is transmitted.

For example, the characteristic scene detection apparatus 10a can receive a broadcasting program A, but a recording and reproduction apparatus controlled by a remote video control apparatus using a server AS may not be able to receive the broadcasting program A. In such a case, it is useless to transmit characteristic scene information about the broadcasting program A. Thus, in such a case, the address of the server AS or the remote video control apparatus using a server AS is deleted as a transmission destination. This function can also be used when characteristic scene information is delivered to a server and/or a video control apparatus that has concluded a special contract based on the contract. In this case, it is preferable to transmit characteristic scene information based on the contract after the characteristic scene information being encrypted so that only the server and/or the video control apparatus that has concluded the special contract can receive the characteristic scene information based on the contract. The encrypted characteristic scene information based on the contract can be decrypted by the decryption key held by the contracting server and/or the video control apparatus.

The characteristic scene information classification unit 736 manages characteristic scene information by dividing the characteristic scene information, for example, by genre. There are various genres such as sports, news, dramas, popular music, variety, and movies. For the classification, information can be acquired from program information or the administrator of the characteristic scene detection apparatus 10a may provide classification code to each item of characteristic scene information via the keyboard 711. In such a case, an item of genre is added to the format shown in FIGS. 3 and 4.

The input information receiving unit 740 detects information input via the modem of the characteristic scene information transmitting unit 14 and information input from the memory 713, the optical disk drive 714, or the keyboard 711 and notifies the central processing unit (CPU, not shown) that manages the overall operation of the information.

The database management unit 741 can store, for example, a plurality of samples for comparison to detect the face of a person in characteristic scenes. New samples may be added to such samples for comparison by an edit application or old samples may be deleted.

Some embodiments of the present invention have been described, but these embodiments are presented only as examples and are not intended to limit the scope of the invention. These new embodiments can be carried out in other various forms and various omissions, substitutions, and alterations can be made without deviating from the spirit of the invention. These embodiments and modifications thereof are included in the scope and spirit of the invention and also included in the invention described in the claims and equivalents thereof.

## Claims

1. A video analysis information upload apparatus, **characterized by** comprising:
a video analysis unit (12) configured to detect feature amount information having preset characteristics by analyzing a received video signal;
a characteristic scene detection unit (13) configured to generate video characteristic scene information containing a time that identifies a characteristic scene of the video signal and a program name by using the feature amount information detected by the video analysis unit; and
a characteristic scene information transmitting unit (14) configured to upload the video characteristic scene information to a server as a characteristic scene storage/delivery apparatus.

2. The video analysis information upload apparatus according to claim 1, **characterized by** further comprising:
a receiving unit (11) that receives the video signal, wherein
the video analysis unit (12) detects the feature amount from each of the video signals received by the receiving unit,
the characteristic scene detection unit (13) generates the video characteristic scene information when the feature amount is detected by the video analysis unit, and
the characteristic scene information transmitting unit (14) uploads the video characteristic scene information as required when the video characteristic scene information is generated.

3. The video analysis information upload apparatus according to claim 1, **characterized in that**
the video analysis unit (12) analyzes the video signal based on an application containing parameters that are conditions for analyzing the video signal and
the parameters can be modified or changed based on control of a control unit.

4. The video analysis information upload apparatus according to claim 1, **characterized in that**
applications used by the video analysis unit (12) to analyze the video signal can have a new application added thereto or an old application deleted therefrom based on control of a control unit.

5. A video viewing system, **characterized by** comprising:
a video analysis unit (12) configured to detect feature amount information having preset characteristics by analyzing a received video signal;
a characteristic scene detection unit (13) configured to obtain video characteristic scene information containing a time that identifies a characteristic scene of the video signal and a program name from the feature amount information detected by the video analysis unit;
a characteristic scene information transmitting unit (14) configured to upload the video characteristic scene information to a server as a characteristic scene storage/delivery apparatus (20);
a video control apparatus (30) configured to download the video characteristic scene information by using the characteristic scene storage/delivery apparatus (20); and
a recording and reproduction apparatus (40) configured to be controlled by the video control apparatus (30) and reproduces a program specified by the video characteristic scene information and the characteristic scenes thereof.

6. A video viewing method **characterized by** comprising:
detecting feature amount information having preset characteristics by analyzing a received video signal
through a video analysis unit (12);
obtaining video characteristic scene information containing a time that identifies a characteristic scene of the video signal and a program name from the feature amount information detected by the video analysis unit through a characteristic scene detection unit (13);
uploading the video characteristic scene information to a server as a characteristic scene storage/delivery apparatus through a characteristic scene information transmitting unit (14);
downloading the video characteristic scene information from the characteristic scene storage/delivery apparatus through a video control apparatus (30); and
controlling a recording and reproduction apparatus (40) by the video control apparatus (30) and reproducing a program specified by the video characteristic scene information and the characteristic scenes thereof.
